# EUROPÄISCHE PATENTSCHRIFT

(11) **EP 2 425 796 B1**
(45) Veröffentlichungstag und Bekanntmachung des Hinweises auf die Patenterteilung: **27.11.2013**
(21) Anmeldenummer: 10175139.4
(22) Anmeldetag: 02.09.2010
(51) Int. Cl.: A61C 1/08

(54) **Implantierungshilfsanordnung**
Implantation help assembly
Dispositif d'aide à l'implantation

(43) Veröffentlichungstag der Anmeldung: 07.03.2012
(73) Patentinhaber: Abboud, Marcus, 53721 Siegburg (DE)
(72) Erfinder: Abboud, Marcus, 53721 Siegburg (DE)
(74) Vertreter: Patentanwälte ter Smitten Eberlein Rütten Partnerschaftsgesellschaft

(56) Entgegenhaltungen:
- WO-A1-2008/117323
- WO-A1-2010/097405

## Beschreibung

Die Erfindung bezieht sich auf eine Implantierungshilfsanordnung für das Implantieren eines Kieferimplantats in einem Patientenkiefer, wobei das implantierte Kieferimplantat zur Befestigung einer Zahnprothese an den Patientenkiefer dient.

Bei dem gesamten Prozess, der dem eigentlichen Implantieren des Kieferimplantats vorausgeht, ist insbesondere die räumlich exakte Bohrung der Implantatbohrung in dem Patientenkiefer von großer Bedeutung. Zum Bohren der Implantatbohrung werden daher Schablonen verwendet, die auf den Patientenkiefer aufsetzbar sind und eine Führungsbohrung zum Bohren der Implantatbohrung in den Patientenkiefer aufweisen. Bekannte Implantierungshilfsanordnungen und Verfahren zur Herstellung einer Schablone zum Bohren einer Implantatbohrung in den Patientenklefer sind relativ aufwändig, ungenau, fehlerträchtig und umständlich in der Handhabung.

Aus WO 2008/117323 A1 ist eine Implantierungshilfsanordnung bekannt, die einen radio-opaken Kieferadapter mit Kupplungsteilen zum Aufstecken einer Bohrschablone aufweist. Zur räumlichen Orientierung in einem radiologischen dreidimensionalen Bild weist der Kieferadapter entsprechende Bohrungen auf.

Aus der nachveröffentlichten WO 2010/097405 A1 ist eine Implantferungshilfsanordnung bekannt, bei der der Kieferadapter aus einem nicht-radio-opaken Körper besteht, der integrierte radio-opake Referenzmarker aufweist.

Aufgabe der Erfindung ist es demgegenüber, eine einfach anzuwendende Implantierungshilfsanordnung und ein einfach anzuwendendes Verfahren zur Herstellung einer Schablone zum Bohren der Implantatbohrung in den Patientenkiefer zu schaffen.

Diese Aufgabe wird erfindungsgemäß gelöst durch eine Implantierungshilfsanordnung gemäß Anspruch 1 beziehungsweise durch ein Verfahren zur Herstellung einer Implantierungshilfsanordnung gemäß Anspruch 7.

Die erfindungsgemäße Implantierungshilfsanordnung besteht mindestens aus drei Teilen, nämlich einem Kieferadapter, einer separaten Bohrschablone und einer separaten Markerplatte.

Der Kieferadapter weist ein radiologisch nicht-sichtbares Individualformteil auf, das an den Patientenkiefer anpassbar beziehungsweise angepasst ist. Das auf den Patientenkiefer aufgesetzte Individualformteil stellt mit dem betreffenden Abschnitt des Patientenkiefers einen Formschluss her, so dass der Kieferadapter reproduzierbar und stets in der gleichen Position und Orientierung auf dem Patientenkiefer aufliegt. Der Kieferadapter stellt eine räumlich eindeutige Referenz zu dem Patientenkiefer her.

Der Kieferadapter weist einen radiologisch nicht sichtbaren Kupplungsstecker auf, der mit der Kupplungsbuchse der Bohrschablone beziehungsweise der Markerplatte ebenfalls eine räumlich reproduzierbare formschlüssig Kupplung ermöglicht. Unter einer Kupplungsbuchse sind alle Bauelemente zu verstehen, die eine räumlich reproduzierbare Kupplung der Bohrschablone an den Kieferadapter beziehungsweise der Markerplatte an den Kieferadapters ermöglichen. Der Kupplungsstecker beziehungsweise die komplementäre Kupplungsbuchse können jeweils ein einziges komplexes Bauteil sein, das diese Aufgabe erfüllt, können jedoch auch jeweils mehrerer Bauteile sein, die zusammen diese Funktion erfüllen.

Die Markerplatte weist einen radiologisch sichtbaren dreidimensionalen 3-D-Marker auf, der bei seiner dreidimensionalen radiologischen Erfassung eine räumlich eindeutige Lage- und Orientierungs-Bestimmung des 3-D-Markers und der mit ihm starr und eindeutig verbundenen Teile erlaubt. Der 3-D-Marker kann ein einziges komplexes Bauteil sein, das eine räumlich eindeutige Lage- und Orientierung-Bestimmung erlaubt. Es können jedoch auch mehrere einzelne 3-D-Marker vorgesehen sein, die beispielsweise als radiologisch sichtbare kleine Kugeln mit jeweils einem Durchmesser von 0,5 bis circa 3 mm ausgebildet sind. Wenn die Markerplatte an den Kieferadapter angekuppelt und der Kieferadapter auf dem Patientenkiefer aufgesetzt ist, wird auf diese Weise eine eindeutige räumliche Beziehung zwischen dem Patientenkiefer und dem Kieferadapter hergestellt beziehungsweise radiologisch sichtbar gemacht. Auch die Markerplatte weist eine bevorzugt radiologisch nicht-sichtbare Kupplungsbuchse auf, die mit dem Kupplungsstecker des Kieferadapters räumliche eindeutig zusammenkuppelbar ist.

Gemäß einer ersten bevorzugten Ausführungsform der Impfantierungshiffsanordnung ist eine Prothesenplatte vorgesehen, die mindestens einen radiologisch sichtbaren Prothesenzahn und eine Kupplungsbuchse aufweist, die mit dem Kupplungsstecker des Kieferadapters eindeutig orientiert zusammenkuppelbar ist. Der Prothesenzahn ist radiologisch sichtbar und stellt eine Planungshilfe bei der virtuellen Planung und Konstruktion der Zahnprothese dar.

Die Prothesenplatte kann mit der Markerplatte einstückig ausgebildet sein, so dass die Prothesen platte und die Markerplatte ein und dasselbe Bauteil ist. Bevorzugt ist die Prothesenplatte jedoch als ein separates Bauteil ausgebildet.

Besonders bevorzugt weist der Kieferadapter in dem Bereich des Patientenkiefers, in dem die Zahnprothese geplant ist beziehungsweise in dem der Prothesenzahn der Prothesenplatte angeordnet ist, eine Ausnehmung auf. Dieser Ausnehmungs-Bereich deckt sich mit dem Bereich der Bohrschabionen-Führungsbohrung, die bei dieser Ausführungsform unmittelbar die Schablone zum Bohren der Implantatbohrung in den Patientenkiefer bildet. Der Kieferadapter weist daher bevorzugt keinen Prothesenzahn auf. Durch die Kieferadapter-Ausnehmung ist es möglich, die Bohrschablone direkt als Implantatbohrungs-Schalone zu verwenden. Besonders bevorzugt ragt die Bohrschablone insbesondere mit ihrem die Führungsbohrung aufweisenden Bereich in die Ausnehmung der Prothesenplatte hinein, so dass die Bauhöhe der auf diese Weise hergestellten Implantatbohrungs-Schablone extrem gering ist.

Gemäß einer zweiten Ausführungsform, die eine Alternative zur ersten Ausführungsform darstellt, weist der Kieferadapter mindestens einen Prothesenzahn auf, der radiologisch sichtbar ist, und eine Pianungshilfe bei der virtuellen computergestützten Planung und Konstruktion der Zahnprothese darstellt.

Vorzugsweise kann der Kieferadapter bei beiden Ausführungsformen eine standardisierte Kupplungsplatte mit dem Kupplungsstecker aufweisen, wobei die Kupplungsplatte auf dem Individualformteil befestigt ist. Auch die Bohrschablone ist eine standardisierte Bohrschablonenplatte, die die Kupplungsbuchse aufweist. Die Eigenschaft "standardisiert" bedeutet in diesem Zusammenhang, dass die Kupplungsplatte und die Bohrschablonenplatte nur in einer einzigen und bekannten Lage und Orientierung zueinander zusammenkuppelbar sind. Da ihr räumlicher Bezug zueinander festgelegt und bekannt ist, können das Individualformteil, die Kupplungsplatte und die Bohrschablonenplatte radiologisch nicht-sichtbar ausgebildet sein. Ferner ist es hierdurch möglich, die Führungsbohrung mit Hilfe von bei der virtuellen Zahnprothesen-Planung generierten Implantatbohrungs-Lageinformationen die Führungsbohrung durch eine Werkzeugmaschine an einem von dem Patientenkiefer und dem Kieferadapter entfernten Ort herzustellen, und erst nach der Herstellung an den Behandlungsort zu übersenden.

Gemäß dem Verfahrensanspruch 7 wird zunächst das Kieferadapter-Individualformteil von dem Patientenkiefer oder einem realen Patientenkiefer-Modell abgeformt, beispielsweise mit Hilfe eines schnell aushärtenden Kunststoffes. Anschließend wird der Kupplungsstecker an das Individualformteil angebracht, beispielsweise, indem eine standardisierte Kupplungsplatte einschließlich des Kupplungssteckers mit dem Individualformteil verbunden, beispielsweise verklebt, wird. Das Individualformteil mit dem Kupplungsstecker beziehungsweise mit der Kupplungsplatte bildet den Kieferadapter.

Anschließend wird die Markerplatte an dem Kieferadapter durch Zusammenstecken der Markerplatte-Kupplungsbuchse mit dem Kieferadapter-Kuppfungsstecker montiert, und der mit der Markerplatte versehene Kieferadapter auf den Patientenkiefer aufgesetzt. Diese Situation wird dann radiologisch dreidimensional in Form eines entsprechenden digitalen dreidimensionalen Kieferbildes dreidimensional erfasst, wobei in dem Kieferbild im wesentlichen der Patientenkiefer, und hierbei im wesentlichen der Kieferknochen, sowie der 3-D-Marker und gegebenenfalls der Prothesenzahn sichtbar sind. Die Qualität, Genauigkeit und Auflösung des Kieferbildes kann durch weitere optische Aufnahmen und Verfahren noch verbessert werden.

Mit Hilfe des auf diese Weise gewonnenen dreidimensionalen Kieferbildes wird an einem Computer das Kieferimplantat sowie die hierfür erforderliche Impfantatbohrung in Form von Implantatbohrungs-Lageinformationen geplant und festgelegt.

Anschließend wird die Führungsbohrung in der Bohrschablone mit Hilfe der Implantatbohrungs-Lageinformationen gebohrt. Hierbei wird bezüglich der Lage der Führungsbohrung der Bohrschablone berücksichtigt, ob die Bohrschablone entweder eine Hilfs-Bohrschablone zum Bohren einer Führungsbohrung in dem Kieferadapter, oder aber, aufgesetzt auf den Kieferadapter, bereits unmittelbar die Implantatbohrungs-Schablone darstellt.

Anschließend wird die Bohrschablone an dem Kieferadapter durch Zusammenstecken der Bohrschablonen-Kupplungsbuchse mit dem Kieferadapter-Kupplungsstecker montiert.

Als Zwischenschritt vor der Planung der Zahnprothese kann das Aufsetzen einer Prothesenplatte auf den Patientenkiefer, wobei die Prothesenplatte einen radiologisch sichtbaren Prothesenzahn aufweist, und das radiologisch dreidimensionale Erfassen eines zusätzlichen Kieferbildes dieser Situation vorgesehen sein. Der in dem Kieferbild sichtbarer Prothesenzahn ist eine Planungshilfe insbesondere bei der Planung der Zahnprothese.

Gemäß einer zweiten alternativen Ausführungsform des weiteren Verfahrens, das sich auf die Implantierungshilfsanordnung gemäß Anspruch 3 bezieht, ist nach der Bohrschablonen-Montage vorgesehen, zunächst mit Hilfe der Bohrschablone in den Kieferadapter eine Führungsbohrung in Ausrichtung mit der Bohrschablone-Führungsbohrung zu bohren, Daraufhin wird die Bohrschablone von dem Kieferadapter wieder entfernt und wird alleine der Kieferadapter in den Patientenkiefer eingesetzt.

Im folgenden werden zwei Ausführungsbeispiele der Erfindung anhand der Zeichnungen näher erläutert.

Es zeigen:
Figur 1 ein Sagittalebenen-Schnitt einer ersten Ausführungsform einer Implantierungshilfsanordnung, die von einem Kieferadapter, einer Bohrschablone und einer Markerplatte gebildet wird,
Figur 2 ein Sagittalebenen-Schnitt einer zweiten Ausführungsform einer Implantierungshilfsanordnung, die von einem Kieferadapter, einer Bohrschablone, einer Markerplatte und einer Prothesenplatte gebildet wird, und
Figur 3 eine Draufsicht auf den auf den Patientenkiefer aufgesetzten Kieferadapter der implantierungshilfsanordnung der Figur 2.

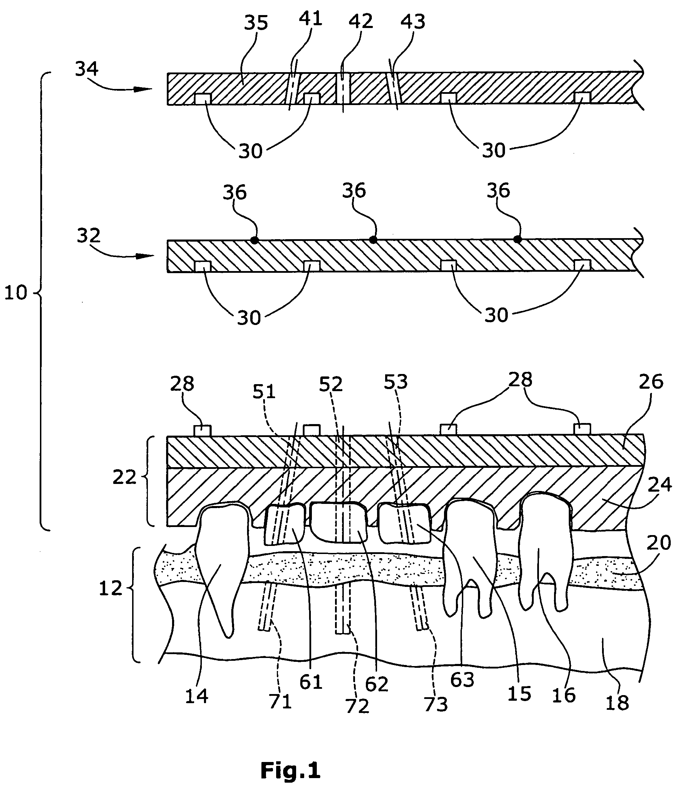

In der Figur 1 ist eine erste Ausführungsform einer Implantierungshilfsanordnung 10 dargestellt, die im wesentlichen von einem Kieferadapter 22, einer separaten Bohrschablone 34 und einer separaten Markerplatte 32 gebildet wird. Ferner ist in der Figur 1 ein Patientenkiefer 12 dargestellt, der einen Kieferknochen 18, Zahnfleisch 20 und nicht auszutauschende, also "gesunde" Zähne 14,15,16 aufweist.

Der Kieferadapter 22 besteht aus einem radiologisch nicht-sichtbaren Individualformteil 24, einer hiermit verbundenen, beispielsweise verklebten, standardisierten und radiologisch nicht-sichtbaren Kupplungsplatte 26 mit mehreren Kupplungssteckern 28 sowie gegebenenfalls einem oder mehreren radiologisch sichtbaren Prothesenzähnen 61,62,63. Der Kieferadapter 22 wird hergestellt, indem zunächst das Individualformteil 24 von dem Patientenkiefer 12 oder einem realen Modell des Patientenkiefers 12 mit Hilfe eines schnell aushärtenden Kunststoffs abgeformt wird. Nach dem Aushärten des Kunststoffes kann das Individualformteil 24 von dem Patientenkiefer 12 abgenommen werden, und wird die standardisierte Kupplungsplatte 26 mit dem Individualformteil 24 verklebt. Ferner können an dem Individualformteil zur Erleichterung der spätere Planung der Kieferimplantate Prothesenzähnen 61,62 ,63 fixiert werden. Die Prothesenzähne sind jedoch alleine Platzhalter und erleichtern durch ihre radiologische Sichtbarkeit die Zahnprothesen- und Kieferimplantat-Planung.

Auf den auf diese Weise hergestellten Kieferadapter 22 wird die Markerplatte 32 durch Verkuppeln der Kupplungsstecker 28 mit den Markerpiatten-Kuppfungsbuchsen 30 aufgesetzt. Anschließend wird diese Anordnung auf den Patientenkiefer 12 aufgesetzt, und wird der Patientenkiefer einschließlich des Kieferadapters 22 und der Markerplatte 32 mit Hilfe eines DVT-Gerätes radiologisch dreidimensional erfasst. Optional können zusätzlich weitere bildgebende Verfahren verwendet werden, um das hieraus resultierende Kieferbild genauer erstellen zu können. Anschließend wird die Markerplatte 32 wieder von dem Kieferadapter 22 abgenommen.

Die Markerplatte 32 weist mehrere 3-D-Marker 36 in Form von radiologisch sichtbaren Metall-Kugeln auf, die in den Kunststoff-Markerplatten-Körper 33 eingegossen sind und einen Durchmesser von circa 1,0 mm aufweisen.

Nach dem Erfassen des dreidimensionalen Kieferbildes werden an einem Computer virtuell die Zahnprothesen und die dazugehörigen Kieferimplantate geplant. Insbesondere werden hierbei jeweils auch die Position und Orientierung der Kieferimplantate in Bezug auf den Patientenkiefer 12 festgelegt, Hierbei werden auch die Lageinformationen der zugeordneten Implantatbohrungen 71,72 ,73 in dem Patientenkiefer 12 beziehungsweise in dem Kieferknochen 18 festgelegt beziehungsweise ermittelt.

Die Implantatbohrung-Lageinformationen werden anschließend an den Ort übermittelt, an dem mit Hilfe der Implantatbohrung-Lageinformationen Entsprechende Führungsbohrungen 41,42,43 in die Bohrschablone 34 durch eine digital gesteuerte Bohrmaschine gebohrt werden. Die Bohrschablone 34 wird im wesentlichen von einem Kunststoff-Körper 35 gebildet, der an einer Seite Kupplungsbuchsen 30 aufweist, mit deren Hilfe eine formschlüssige Verkopplung mit den Kupplungssteckern 28 des Kieferadapters 42 hergestellt werden kann.

Die Führungsbohrungen 41,42 ,43 werden derart in die Bohrschablone 34 gebohrt, dass diese mit den geplanten Implantatbohrungen 71,42 ,73 fluchten würden, wenn die Bohrschablone 34 auf dem Kieferadapter 22 montiert und der Kieferadapter auf dem Patientenkiefer 12 aufgesetzt wäre, was so jedoch wegen der beengten Platzverhältnisse in dem Mund des Patienten nicht möglich ist.

Daher wird die Bohrschablone 34 zunächst extraoral an den Kieferadapter 22 angekuppelt, und werden mit einer Bohrmaschine manuell Führungsbohrungen 51,52,53 in dem Kieferadapter 22 in Ausrichtung mit den Bohrschabionen-Führungsbohrungen 41,42,43 gebohrt. Der Bohrschaft der Bohrmaschine wird dabei durch die Bohrschablone-Führungsbohrungen 41,42,43 geführt. Anschließend wird die Bohrschablone 34 von dem Kieferadapter 22 abgenommen. Anschließend können, müssen jedoch nicht, Metall-Führungshülsen in die Kieferadapter-Führungsbohrungen 51,52,53 eingesetzt werden.

Der auf diese Weise bearbeitete Kieferadapter 22 ist nun eine Schablone zum Bohren der Implantatbohrungen 71,72,73. Der Kieferadapter 22 wird hierzu wieder auf den Patientenkiefer 12 aufgesetzt. Dann werden mit einer Bohrmaschine manuell die Implantatbohrungen 71,72,73 in Ausrichtung mit den Kieferadapter-Führungsbohrungen 51,52,53 in den Patientenkiefer 12 gebohrt, und der Kieferadapter 22 schließlich von dem Patientenkiefer 12 abgenommen.

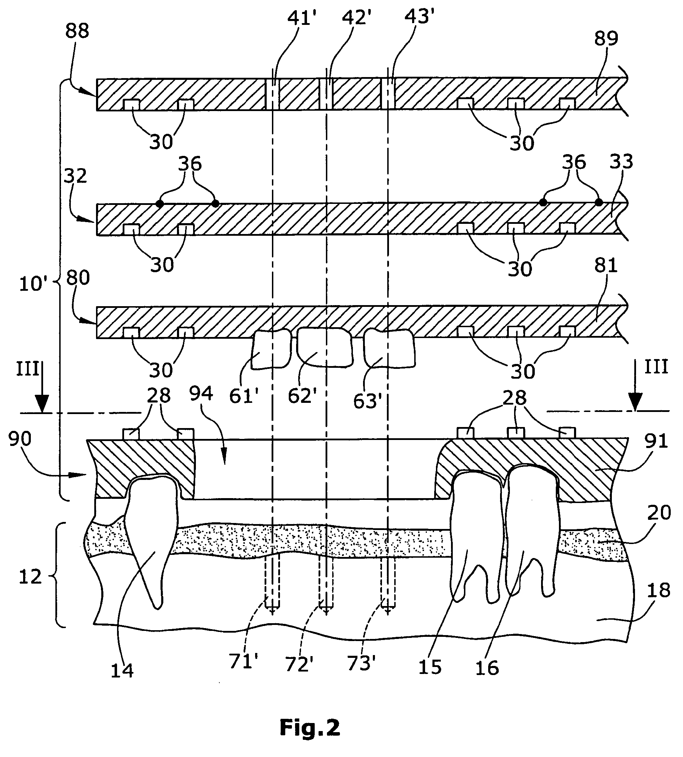

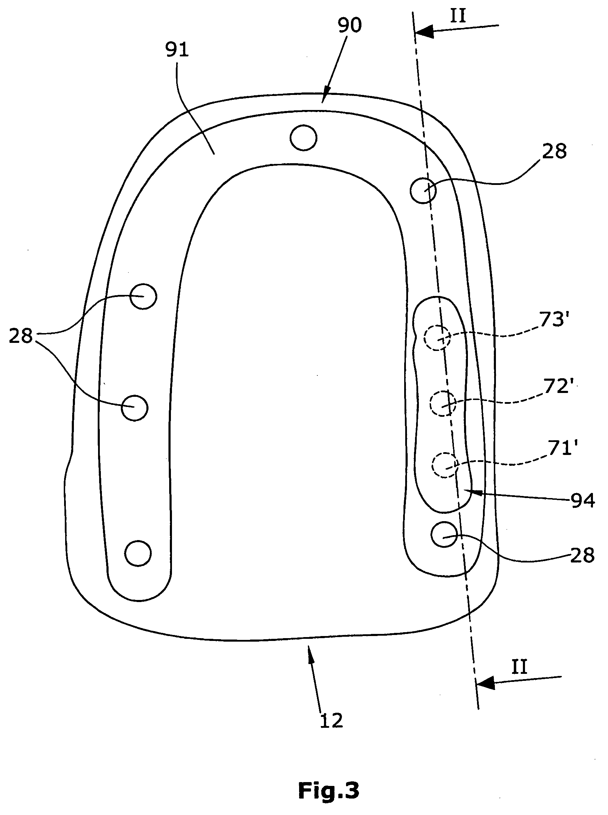

In den Figuren 2 und 3 ist eine zweite Ausführungsform einer Implantierungshilfsanordnung 10' dargestellt, die im wesentlichen von einem Kieferadapter 90, einer separaten Markerplatte 32, einer Prothesenplatte 80 und einer Bohrschablone 88 gebildet wird.

Im Unterschied zu der Imptantierungshitfsanordnung 10 der Figur 1 ist bei der Implantierungshilfsanordnung 10' der Figur 2 der Kieferadapter 90 mit einer Ausnehmung 94 in dem Bereich versehen, in dem die Zahnprothesen und daher auch die Implantatbohrungen 71',72',73' in dem Patientenkiefer 12 vorgesehen sind, siehe hierzu Figur 3. Auf diese Weise kann die Bohrschablone 88 mit den Führungsbohrungen 41',42',43' in dem Bohrschabionen-Körper 89 schließlich auf den Kieferadapter 90 aufgesetzt werden, und in dieser Kombination bereits unmittelbar als Schablone zum Bohren der Implantatbohrung in 71', 72',73' dienen. Dadurch entfällt das bei dem Ausführungsbeispiel der Figur 1 erforderliche Bohren der Führungsbohrungen 51,52,53 in dem Kieferadapter 22, so dass ein ganzer Arbeitsschritt entfällt und die Handhabung erheblich vereinfacht ist.

Der Kieferadapter 90 der Figuren 2 und 3 ist vorliegend als einstückiger Körper 91 dargestellt, kann jedoch auch aus einem Individualformteil und einer standardisierten Kupplungsplatte zusammengesetzt sein.

Optional kann ein Zwischenschritt vorgesehen werden, nämlich die Verwendung der Prothesenplatte 80, die an dem Prothesenplatten.Körper 81 mehrere Prothesenzähne 61',62',63' als Planungshilfe aufweist, die radiologisch sichtbar sind. Die Prothesenplatte 80 wird auf den Kieferadapter 90 aufgesetzt, und die Kombination aus Prothesenplatte 80 und Kieferadapter 90 wird anschließend auf den Patientenkiefer 12 aufgesetzt. Diese Anordnung wird radiologisch dreidimensional erfasst, und das auf diese Weise gewonnene zusätzliche Kieferbild mit dem Kieferbild überlagert, das von dem Patientenkiefer gemacht wird, auf den der Kieferadapters 90 mit der Markerplatte 32 sitzt.

Grundsätzlich kann die Verwendung der Prothesenplatte 80 jedoch entfallen, beispielsweise und insbesondere dann, wenn die durch die Zahnprothese zu ersetzenden Original-Zähne bei der radiologischen Erfassung des Kieferbildes noch in dem Patientenkiefer 12 sitzen. Auf die Prothesenptatte 80 kann auch dann verzichtet werden, wenn die Zahnprothesen ausschließlich mit Hilfe des Kieferbildes am Computer geplant werden, und die Zahnprothesen beispielsweise aus einer virtuellen Bibliothek bezogen werden.

Grundsätzlich können die 3-D-Marker 36 bei dieser Ausführungsform auch in den Kieferadapter 90 und/oder in der Prothesenplatte 80 eingegossen sein, so dass dann eine separate Markerplatte 32 entfallen würde.

Die Bohrschablone 88 kann insbesondere mit ihrem die Führungsbohrungen 41',42',43' aufweisenden Bereich in die Ausnehmung 94 des Kieferadapters 90 in Richtung Patientenkiefer 12 hineinragen, so dass die zusammengekoppelte Kombination aus dem Kieferadapter 90 und der Bohrschablone 88 sehr kompakt ist.

## Patentansprüche

1. Implantierungshilfsanordnung (10;10') für das Implantieren eines Kieferimplantats in einem Patientenkiefer (12) zum Stützen einer Zahnprothese, mit:
einem Kieferadapter (22; 90), der
ein an den Patientenkiefer (12) anpassbares Individualformteil (24;91), das individuell und derart an einen Patentenkiefer (12) anpassbar ist, dass sich der Kieferadapter (23;90) reproduzierbar auf den Patientenkiefer (12) formschlüssig aufsetzen lässt, und
einen Kupplungsstecker (28) aufweist, wobei das Individualformteil (24;91) und der Kupplungsstecker (28) radiologisch nicht-sichtbar sind,
einer separaten Bohrschablone (34; 88) mit
einer Führungsbohrung (41,42,43;41',42',43') zum Bohren einer Führungsbohrung (51,52,53) In den Kieferadapter (92) oder einer Implantatbohrung (71',72',73') in den Patientenkiefer (12) und
einer Kupplungsbuchse (30), die mit dem Kupplungsstecker (28) zu einer Kupplungsanordnung räumlich eindeutig und definiert zusammenkuppelbar ist, und
einer separaten Markerplatte (32) mit
einem radiologisch sichtbaren 3-D- Marker (36), der, wenn die Markerplatte (32) an den Kieferadapter (22;90) angekuppelt und der Kieferadapter (22;90) auf dem Patientenkiefer (12) aufgesetzt ist, die räumliche Beziehung zwischen dem Patientenkiefer (12) und dem Kieferadapter (22;90) herstellt, und
einer Kupplungsbuchse (30), die mit dem Kupplungsstecker (28) zu einer Kupplungsanordnung räumlich eindeutig und definiert zusammen kuppelbar ist.

2. Implantierungshilfsanordnung (10') nach Anspruch 1, mit einer Prothesenplatte (80), die mindestens einen Prothesenzahn (61',62',63'), der radiologisch sichtbar ist, und eine Kupplungsbuchse (30) aufweist, die mit dem Kupplungsstecker (28) zu einer Kupplungsanordnung räumlich eindeutig und definiert zusammen kuppelbar ist.

3. Implantierungshilfsanordnung (10) nach Anspruch 1, wobei der Kieferadapter (22) mindestens einen Prothesenzahn (61,62,63) aufweist, der radiologisch sichtbar ist.

4. Implantierungshilfsanordnung (10') nach Anspruch 1 oder 2, wobei der Kieferadapter (90) keinen Prothesenzahn aufweist.

5. Implantierungshilfsanordnung (10') nach Anspruch 4, wobei der Kieferadapter (90) in Ausrichtung mit der BohrschablonenFührungsbohrung (41',42',43') eine Ausnehmung (94) aufweist.

6. Implantierungshilfsanordnung (10) nach einem der vorangegangenen Ansprüche 1 oder 3, wobei der Kieferadapter (22) eine standardisierte Kupplungsplatte (26) mit dem Kupplungsstecker (28) aufweist, die auf dem Individualformteil (24) befestigt ist, und die Bohrschablone (34) eine standardisierte Bohrschablonenplatte (35) mit der Kupplungsbuchse (30) ist, wobei die Führungsbohrung (41,42,43) durch eine Werkzeugmaschine mit Hilfe von ImplantatbohrungsLageinformationen in die Bohrschablonenplatte (35) gebohrt wurde.

7. Verfahren zur Herstellung einer Implantierungshilfsanordnung (10,10') gemäß einem der vorangegangenen Ansprüche, mit den Verfahrensschritten :
Abformen des Kieferadapter-Individualformteils (24;91) von dem Patientenkiefer (12) oder einem Patientenkiefer-Modell,
Anbringen des Kupplungssteckers (28) an dem Individualformteil (24; 91),
Montage der Markerplatte (32) an den Kieferadapter (22; 90) durch Zusammenstecken der Markerplatten-Kupplungsbuchse (30) mit dem Kieferadapter-Kupplungsstecker (28),
Aufsetzen des mit der Markerplatte (32) versehenen Kieferadapters (22;90) auf den Patientenkiefer (12),
dreidimensionales radiologisches Erfassen eines Kieferbildes des Patientenkiefers (12) und des 3-D-Markers (36),
virtuelles Konstruieren und Ermitteln der Lageinformationen einer Implantatbohrung für das Kieferimplantat in dem dreidimensionalen Kieferbild,
Bohren der Führungsbohrung (41,42,43; 41',42',43') in der Bohrschablone (34;88) mit Hilfe der Implantatbohrungs-Lageinformationen, und
Montage der Bohrschablone (34; 88) an den Kieferadapter (22;90) durch Zusammenstecken der Bohrschablonen-Kupplungsbuchse (30) mit dem Kieferadapter-Kupplungsstecker (28).

8. Verfahren zur Herstellung einer Implantierungshilfsanordnung (10) gemäß Anspruch 7 zur Herstellung einer Implantierungshilfsanordnung (10) gemäß Anspruch 3, mit den der Bohrschablonen-Montage nachfolgenden Verfahrensschritten:
Bohren einer Führungsbohrung (51,52,53) in den Kieferadapter (22) in Ausrichtung mit der Bohrschabionen-Führungsbohrung (41,42,43), und
Entfernen der Bohrschablone (34) von dem Kieferadapter (22).

## Claims

1. Implantation aid assembly (10; 10') for the implantation of a jaw implant into a patient's jaw (12) intended for the support of a dental prosthesis, with:
a jaw adapter (22; 90) which comprises
an individualized molded part (24; 91) adaptable to a patient's jaw (12), which is individual and adaptable to a patient's jaw (12) such that the jaw adapter (22; 90) can be set on a patient's jaw (12) in a reproducible and form-fitting manner, and
a coupling pin (28), wherein the individualized molded part (24; 91) and the coupling plug (28) are radiologically invisible,
a separate drilling jig (34; 88) comprising
a guide bore (41, 42, 43; 41', 42', 43') for drilling a guide bore (51, 52, 53) into the jaw adapter (22; 90) or an implant bore (71', 72', 73') into a patient's jaw (12), and
a coupling socket (30) adapted to be coupled with the coupling pin (28) in a spatially distinct and defined manner to form a coupling arrangement, and
a separate marker plate (32) comprising
a radiologically visible 3D marker (36) which, with the maker plate (32) coupled to the jaw adapter (22; 90) and the jaw adapter (22; 90) set on a patient's jaw (12), defines the spatial relationship between a patient's jaw (12) and the jaw adapter (22; 90), and
a coupling socket (30) adapted to be coupled with the coupling pin (28) in a spatially distinct and defined manner to form a coupling arrangement.

2. Implantation aid assembly (10') of claim 1, comprising a prosthesis plate (80) having at least one prosthetic tooth (61', 62', 63') that is radiologically visible and a coupling socket (30) adapted to be coupled with the coupling pin (28) in a spatially distinct and defined manner to form a coupling arrangement.

3. Implantation aid assembly (10) of claim 1, wherein the jaw adapter (22) has at least one prosthetic tooth (61, 62, 63) that is radiologically visible.

4. Implantation aid assembly (10') of claim 1 or 2, wherein the jaw adapter (90) has no prosthetic tooth (61', 62', 63').

5. Implantation aid assembly (10') of claim 4, wherein the jaw adapter (90) has a recess (94) in alignment with the drilling jig guide bore (41', 42', 43').

6. Implantation aid assembly (10) of one of the preceding claims 1 or 3, wherein the jaw adapter (22) comprises a standardized coupling plate (26) with the coupling pin (28), the plate being fastened on the individualized molded part (24), and wherein the drilling jig (34) is a standardized drilling jig plate (35) with the coupling socket (30), wherein the guide bore (41, 42, 43) has been drilled into the drilling jig plate (35) by means of a machine tool using implant bore position information.

7. Method for making an implantation aid assembly (10, 10') of one of the preceding claims, the method comprising the steps of:
molding the individualized molded part (24; 91) of the jaw adapter from a patient's jaw (12) or a model of a patient's jaw,
attaching the coupling pin (28) to the individualized molded part (24; 91),
assembling the marker plate (32) to the jaw adapter (22; 90) by fitting the marker plate coupling socket (30) and the jaw adapter coupling pin (28) together,
setting the jaw adapter (22; 90) provided with the marker plate (32) on a patient's jaw (12),
three-dimensional radiological imaging of a jaw image of a patient's jaw (12) and the 3D marker (36),
virtual construction and determining of the position information of an implant bore for the jaw implant in the three-dimensional jaw image,
drilling the guide bore (41, 42, 43; 41', 42', 43') in the drilling jig (34; 88) using the implant bore position information, and
assembling the drilling jig (34; 88) to the jaw adapter (22; 90) by fitting the drilling jig coupling socket (30) and the jaw adapter coupling pin (28) together.

8. Method for making an implantation aid assembly (10) of claim 7 for making an implantation aid assembly of claim 3, including the following steps subsequent to the assembly of the drilling jig:
drilling a guide bore (51, 52, 53) in the jaw adapter (22) in alignment with the drilling jig guide bore (41, 42, 43), and
removing the drilling jig (34) from the jaw adapter (22).

## Revendications

1. Ensemble d'aide à l'implantation (10; 10') destiné à l'implantation d'un implant maxillaire dans la mâchoire d'un patient (12) pour supporter une prothèse dentaire, comportant:
un adaptateur de mâchoire (22; 90) avec
une partie moulée individualisée (24; 91) adaptable à la mâchoire d'un patient (12), la partie étant individuelle et adaptable à la mâchoire d'un patient (12) de façon que l'adaptateur de mâchoire (22; 90) peut être placé sur la mâchoire d'un patient (12) d'une manière reproductible et positive, et
une broche d'accouplement (28), ladite partie moulée individualisée (24; 91) et ladite broche d'accouplement (28) étant radiologiquement invisibles,
un gabarit de perçage (34; 88) séparé avec
un perçage de guidage (41, 42, 43; 41', 42', 43') pour percer un perçage de guidage (51, 52, 53) dans l'adaptateur de mâchoire (22; 90) ou un perçage d'implant (71', 72', 73') dans la mâchoire d'un patient (12), et
une douille d'accouplement (30) apte à être accouplée avec la broche d'accouplement (28) d'une manière claire et définie au niveau spatiale, pour former un ensemble d'accouplement, et
une plaque de marquage (32) séparée avec
un marquer tridimensionnel (36), radiologiquement visible, qui, une fois la plaque de marquage (32) est accouplé à l'adaptateur de mâchoire (22; 90) et l'adaptateur de mâchoire (22; 90) est placé sur la mâchoire d'un patient (12), établit la relation spatiale entre la mâchoire d'un patient (12) et l'adaptateur de mâchoire (22; 90), et
une douille d'accouplement (30) apte à être accouplée avec la broche d'accouplement (28) d'une manière claire et définie au niveau spatiale, pour former un ensemble d'accouplement.

2. Ensemble d'aide à l'implantation (10') selon la revendication 1, avec une plaque de prothèse (80) comprenant au moins un dent prosthétique (61', 62', 63') radiologiquement visible et une douille d'accouplement (30) apte à être accouplée avec la broche d'accouplement (28) d'une manière claire et définie au niveau spatiale, pour former un ensemble d'accouplement.

3. Ensemble d'aide à l'implantation (10) selon la revendication 1, dans lequel l'adaptateur de mâchoire (22) comprend au moins une dent prosthétique (61, 62, 63) radiologiquement visible.

4. Ensemble d'aide à l'implantation (10') selon les revendications 1 ou 2, dans lequel l'adaptateur de mâchoire (90) ne comprend aucune dent prosthétique.

5. Ensemble d'aide à l'implantation (10') selon la revendication 4, dans lequel l'adaptateur de mâchoire (90) comprend un évidement (94) en alignement avec le perçage de guidage (41', 42', 43') dans le gabarit de perçage.

6. Ensemble d'aide à l'implantation (10) selon l'une quelconque des revendications précédentes1 ou 3, dans lequel l'adaptateur de mâchoire (22) comprend une plaque d'accouplement (26) standardisée, munie de ladite broche d'accouplement (28) et fixée sur la partie moulée individualisée (24), et ledit gabarit de perçage (34) est une plaque de gabarit de perçage (35) standardisée, munie de la douille d'accouplement (30), le perçage de guidage (41, 42, 43) étant percé dans le gabarit de perçage (35) au moyen d'une machine outil en utilisant des informations de position.

7. Procédé de fabrication d'un ensemble d'aide à l'implantation (10; 10') selon l'une quelconque des revendications précédentes, comprenant les étapes suivantes:
prendre un empreinte de la mâchoire d'un patient (12) ou d'un modèle de la mâchoire d'un patient pour obtenir la partie moulée individualisée (24; 91) dudit adaptateur de mâchoire,
fixer la broche d'accouplement (28) à la partie moulée individualisée (24; 91),
monter la plaque de marquage (32) sur l'adaptateur de mâchoire (22; 90) par emboitement de la douille d'accouplement (30) de la plaque de marquage et de la broche d'accouplement (28) dudit adaptateur de mâchoire,
placer l'adaptateur de mâchoire (22; 90), muni de la plaque de marquage (32), sur la mâchoire d'un patient (12),
capturer, de manière tridimensionnelle et radiologique, une image de mâchoire de la mâchoire d'un patient (12) et du marqueur tridimensionnel (36),
construire, de manière virtuelle, et acquérir les informations de position d'un perçage d'implant pour l'implant maxillaire dans l'image de mâchoire tridimensionnelle,
percer le perçage de guidage (41, 42, 43; 41', 42', 43') dans le gabarit de perçage (34; 88) en utilisant les informations de position du perçage d'implant, et
assembler le gabarit de perçage (34; 88) à l'adaptateur de mâchoire (22; 90) par emboitement de la douille d'accouplement (30) de la plaque de marquage et de la broche d'accouplement (28) dudit adaptateur de mâchoire.

8. Procédé de fabrication d'un ensemble d'aide à l'implantation (10) selon la revendication 7 pour la fabrication d'une aide à l'implantation (10) selon revendication 3, comprenant les étapes suivantes après l'étape d'assemblage du gabarit de perçage:
percer un perçage de guidage (51, 52, 53) dans l'adaptateur de mâchoire (22) en alignement avec le perçage de guidage (41, 42, 43) dans le gabarit de perçage, et
enlever le gabarit de perçage (34) dudit adaptateur de mâchoire (22).
